# EUROPÄISCHE PATENTSCHRIFT

(11) **EP 1 047 568 B1**
(45) Veröffentlichungstag und Bekanntmachung des Hinweises auf die Patenterteilung: **02.05.2002**
(21) Anmeldenummer: 98963538.8
(22) Anmeldetag: 08.12.1998
(51) Int. Cl.: B60J 5/04

(54) **FAHRZEUGTÜR**
VEHICLE DOOR
PORTIERE DE VOITURE

(30) Priorität: 13.01.1998 DE 19801842
(43) Veröffentlichungstag der Anmeldung: 02.11.2000
(73) Patentinhaber: SAI Automotive SAL GmbH, 76732 Wörth am Rhein (DE)
(72) Erfinder: RAHMSTORF, Peter, F-38380 Saint Laurent du Pont (FR); CREUTZ, Lydia, F-67340 Ingwiller (FR)
(74) Vertreter: Pfenning, Meinig & Partner
(86) Internationale Anmeldenummer: EP9807912
(87) Internationale Veröffentlichungsnummer: WO9936281

(56) Entgegenhaltungen:
- DE-A- 3 934 590
- DE-C- 19 511 105
- DE-U- 29 507 235
- FR-A- 2 569 146
- US-A- 5 482 343
- US-A- 5 536 060

## Beschreibung

Die Erfindung betrifft eine Fahrzeugtür gemäß dem Oberbegriff des Anspruchs 1.

Fahrzeugtüren, insbesondere Türen für Kraftfahrzeuge, bestehen beim jetzigen Stand der Techrik aus einem Außen- und Innenblech, wobei diese beiden miteinander verbunden sind und das Grundelement der Tür bilden. Es wird ergänzt durch die meist bewegliche Fensterscheibe, deren Führungs- und Betätigungselemente durch andere Funktionselemente, wie beispielsweise Griffe, Schlösser, Lautsprecher und Kabelbäume, heute meist montiert auf einer Modulträgerplatte, sowie durch eine Innenverkleidung, die die Optik des Fahrzeuginnenraumes vorgibt. Türaußenblech und Türinnenblech sind dabei innerhalb der Brüstung der Fahrzeugtür gegenläufig gewölbt und umschließen den Türinnenraum, der Fensterscheibe und Funktionselemente aufnimmt. Das Türinnenblech besitzt dabei Montageöffnungen bzw. Ausschnitte, die den Einbau der Funktionselemente ermöglichen. Stellvertretend für den Stand der Technik seien DE 295 07 235 und DE 195 11 105 C1 genannt, die den Stand der Technik, von dem die Erfindung ausgeht, ausführlich darlegen.

Die bekannte Anordnung von Türaußen- und Türinnenblech ist zwar bezüglich der Statik der Tür eine zufriedenstellende Lösung, hat aber doch eine Reihe von Nachteilen:

Die Montage der Funktionselemente durch die Aussparungen des Türinnenbleches hindurch erfordert Schwenk-, Dreh- und Kippbewegungen, die die Montage erschweren, besonders dann, wenn die Funktionselemente auf Modulträgern vormontiert sind und der Modulträger als Ganzes "eingefädelt" werden muß.

Gegenüber einem seitlichen Stoß ist der Türkasten "weich"; dem "Seitencrash" wird aber zunehmend Aufmerksamkeit gewidmet. Beim Stand der Technik wird das Verhalten von Türen beim Seitencrash durch zusätzlich eingebaute Verstärkungsprofile verbessert, was zusätzlichen Aufwand bedeutet.

Schließlich engt die Vorgabe von Montageausschnitten die Möglichkeiten der freien Innenraumausstattung ein. Ausstattungsvarianten, mit denen eine einheitliche, Türaußen- und Türinnenblech aufweisende Tür möglichst vielfältig bestückt werden kann, werden künftig aber von Herstellern und Käufern zunehmend gewünscht werden.

Aufgabe der Erfindung ist es daher, eine Fahrzeugtür anzugeben, bei der eine einfache Montage der Funktionselemente möglich ist, vor allem dann, wenn diese auf Modulträgern vormontiert sind, das Seitencrash-Verhalten der Tür verbessert ist, ohne Zusatzelemente zu benötigen, und mehr Freiheitsgrade für die Innenausstattung des Fahrzeugs erhalten werden.

Die Aufgabe wird gelöst durch den kennzeichnenden Teil des Anspruchs 1; die Unteransprüche 2 bis 19 geben vorteilhafte Weiterbildungen der Erfindung an.

Dadurch, daß sich der Modulträger und die von ihm getragenen Funktionselemente in dem zwischen Türinnenblech und Innenverkleidung gebildeten Türinnenraum befinden, braucht das Türinnenblech keine Montagedurchbrüche aufzuweisen, denn der Türinnenraum, der die Funktionselemente aufnimmt, ist für deren Montage, auch wenn sie auf einem Modulträger vormontiert sind, voll zugänglich. Auch die in dem Türinnenraum angeordneten oder diesen begrenzenden Funktionselemente, Modulträger und Innenverkleidungen unterliegen keinerlei Einschränkungen bezüglich einer Variantengestaltung. Wenn dann noch das Türaußenblech und das Türinnenblech einen umlaufenden Versteifungskasten bilden und das Türinnenblech innerhalb der von diesem Versteifungskasten umrandeten Fläche zumindest bereichsweise am Türaußenblech anliegt, so ist die Stabilität des Türsystems in gleichem Maße sichergestellt wie bei Türsystemen nach dem Stand der Technik. Es ergibt sich dann die vorteilhafte Möglichkeit, das Türinnenblech so zu gestalten, daß es mit dem Türaußenblech zusammen zusätzlich mindestens ein (vorzugsweise mehrere) waagerecht verlaufende(s) Kastenprofil (Kastenprofile) bildet, die mit dem umlaufenden Kastenprofil eine statische Einheit bilden und so ohne zusätzliche Bauelemente die Tür gegen einen Seitencrash verstärken.

Im Bereich des Schlosses kann der umlaufende Versteifungskasten abgeflacht ausgeführt sein und es so ermöglichen, daß das Schloß nicht durchgesteckt, sondern aufgesetzt werden kann, was insbesondere die Montage eines auf einem Modulträger befestigten Schlosses erleichtert.

Insbesondere im Bereich der B-Säule, d.h. da, wo bei der Vordertür das Türschloß in die entsprechende Karosseriestrebe eingreift, kann es vorteilhaft sein, wenn das Türinnenblech (und damit der Versteifungskasten) hinterschnitten ausgeführt ist, so daß die bewegliche Fensterscheibe breiter, d.h. mit größerem Sichtfeld, ausgeführt sein kann.

Die Hinterschneidung ermöglicht es, hinreichende Scheibenflächen vorzusehen, ohne daß die durch den Versteifungskasten vorgegebene Stabilität des Türsystems herabgesetzt wird, da eine ausreichende Breite des Versteifungskastens realisiert werden kann.

Das Türinnenblech kann da, wo die Scharniere angeschlagen werden, verstärkt sein, und zwar innerhalb des Versteifungskastens, d.h. nicht sichtbar nach der Verbindung von Türaußen- und Türinnenblech. Gegebenenfalls ist dann ein nachträgliches (also individuelles) Anpassen der Tür an die Karosse möglich, beispielsweise dann, wenn die Tür als komplettes, vormontiertes System an das Montageband geliefert wird.

Innen- und Außenblech werden zweckmäßigerweise am äußeren Umfang durch Falzen des Außenbleches verbunden. In den Bereichen unterhalb der Fensterbrüstung, in denen das Türinnenblech am Türaußenblech anliegt, können die Bleche durch Punkt- oder Nahtschweißungen miteinander verbunden sein; besonders vorteilhaft ist es aber, wenn sie hier durch flächige Verklebung miteinander verbunden sind. Die Kleberschicht dämpft nicht nur Eigenschwingungen der Bleche und verbessert so die Akustik im Fahrzeug, sondern sie gestattet es auch, nichtmetallische Werkstoffe miteinander zu verbinden. Auf diese Weise wird es möglich, Türaußenoder Türinnenblech einzusetzen, die Hybridstruktur haben, d.h., die aus einem Metall-/Kunststoffverbund bestehen. So ist es zum Beispiel möglich, in den unteren Bereich des Türaußenbleches einen Steinschlag-Schutz aus polymeren Werkstoffen zu integrieren. Dabei können die angeformten Polymerbereiche versteifende Rippennetzwerke besitzen, die in die näherungsweise waagerechten Versteifungsprofile des Türinnenbleches eingreifen und die Eigensteifigkeit der Tür und damit deren Sicherheit gegen einen Seitencrash verbessern.

Werden ein- oder zweisträngige Seilzugheber für die Fensterscheibenbewegung verwendet, so gestattet die freie Zugänglichkeit des Türinnenraumes, daß der Seilzugheber samt Führungsschienen für die Scheiben am Modulträger befestigt ist; eine Anordnung, die zwar auch beim Stand der Technik üblich ist, bei der aber die freie Zugänglichkeit des Türinnenraumes die Montage vereinfacht (sie kann mit eingesetzter Scheibe vorgenommen werden) und eine komplette Funktionsprüfung des bestückten Modulträgers gestattet. Bei einfachen Ausstattungsvarianten ist es aber auch möglich, die Führungselemente des Seilzughebers direkt am Türinnenblech zu befestigen, so daß die Scheibe vom Fahrzeuginnenraum her gesehen vor dem Seilzugheber angeordnet ist. In diesem Falle ist es auch möglich, die Scheibe wie bei einem Seilzugheber an zwei gesonderten Führungsschienen gleiten zu lassen, die direkt am Türinnenblech befestigt sind, die Hubbewegung der Scheibe aber durch eine am Modulträger angeordnete Schere ausführen zu lassen. Bei dieser Anordnung sind die Vorteile beider Systeme kombiniert:
Die Scheibe wird im Türinnenraum exakt geführt und kann nicht verkanten; die Hubbewegung hingegen erfolgt mit der funktionssicheren Schere. Zwischen dem Modulträger mit montierten Funktionselementen und der Scheibe (mit den Führungselementen des Hebers) kann auch eine umlaufend gedichtete flächige Feuchtesperre angeordnet sein, beispielsweise eine wiederverwendbare Formschale in Form eines Thermoplast-Tiefziehteiles. Aber auch einmalig zu verwendende Folien (zum Beispiel Schrumpffolien) können angewendet werden. Besonders vorteilhaft ist es, wenn die Feuchtesperre ein aus Folien gebildeter Luftsack ist, der nach der Montage des Modulträgers aufblasbar ist. Er bildet dann einerseits die flächige Feuchtesperre mit umlaufender Dichtung, zum anderen dient er bei einem Seitencrash als zusätzliches Dämpfungselement. Dabei ist es möglich, die Dämpfungscharakteristik durch Ablaßventile, durch die die Luft bei Crash gedrosselt entweichen kann, zu optimieren. Es ist aber auch möglich, diese Seitenpolster mit einem Airbagsystem zu koppeln, beispielsweise über einen gemeinsamen Gasgenerator mit Sensorauslösung. Ein derartiger flächiger Luftsack muß aber nicht in jedem Fall als Feuchtesperre zwischen Modulträger und Türinnenraum angeordnet sein; er kann seine Schutzfunktion auch zwischen Modulträger und Innenverkleidung ausüben, vor allem dann, wenn die Innenverkleidung überwiegend als dünne Schale ausgebildet ist, beispielsweise als thermoplastisches Spritzgußteil oder als Holzfaserformteil.

Eine vorteilhafte Ausführung der Innenverkleidung kann darin bestehen, daß sie folgenden Schichtaufbau (von dem Türinnenraum zum Fahrzeuginnenraum hin) aufweist: Auf ein voluminöses Trägerteil aus geblähten Polypropylenkugeln ist eine dünne Polsterschicht aus Polyurethanschaum (Weichschaum) aufgebracht, die von einer Dekorschicht aus Folien, Geweben oder Leder sichtseitig abgedeckt ist. Eine derartig strukturierte Innenverkleidung hat vielfältige Vorteile:

Sie ist leicht und hat gute akustische und mechanische Dämpfungseigenschaften.

Bei Verwendung eines einheitlichen Trägerteils kann durch Variation der Weichschaumschicht eine unterschiedliche Innenkontur verwirklicht werden.

In das Trägerteil können örtlich Verstärkungselemente und/oder Befestigungsstützpunkte mit eingeschäumt sein, mit deren Hilfe beispielsweise bestückte Modulträger mit dem Trägerteil zu einer kompakten Baugruppe vereinigt werden können, um eine Kompaktmontage zu ermöglichen, gegebenenfalls unter Einschluß der Feuchtesperren.

Die Erfindung sei nunmehr anhand der Fign. 1 bis 9 näher erläutert und beschrieben. Es zeigen:
- Fig. 1: einen schematischen Schnitt durch eine erfindungsgemäße Tür,
- Fig. 2: eine perspektivische Darstellung des aus Türinnen- und Türaußenblech gebildeten Grundelementes einer erfindungsgemäßen Tür, bei dem Türaußen- und Türinnenblech flächig aneinanderliegen,
- Fig. 3: den Schnitt A-A gemäß Fig. 2 in gleicher Darstellung,
- Fig. 4: ebenfalls in perspektivischer Darstellung das aus Türinnen- und Türaußenblech gebildete Grundelement der Tür mit mehreren waagerecht verlaufenden Versteifungskästen,
- Fig. 5: in gleicher Darstellung den Schnitt B-B gemäß Fig. 4,
- Fig. 6: eine flächige Feuchtesperre in Form eines aufblasbaren Dämpfungselementes,
- Fig. 7: den Schnitt C-C gemäß Fig. 6,
- Fig. 8: einen geschnittenen Bereich eines Innenverkleidungsteils, und
- Fig. 9: einen schematisierten, waagerechten Schnitt durch eine Tür mit hinterschnittenem Versteifungsrahmen.

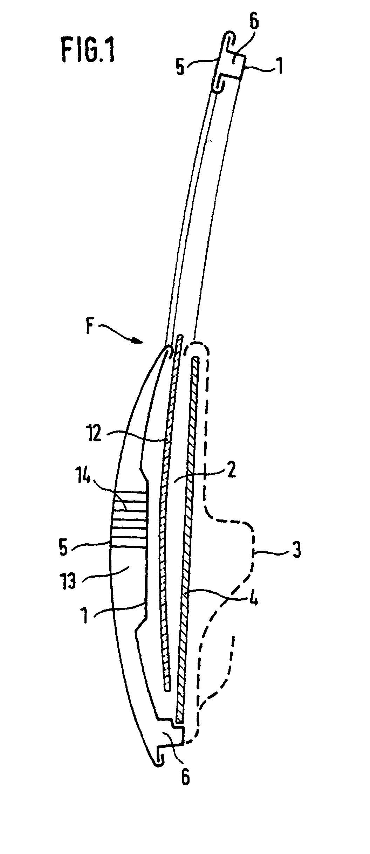

In Fig. 1 sind mit 1 das Türinnenblech und mit 5 das Türaußenblech benannt. Mit 4 ist der Modulträger bezeichnet, der zusammen mit dem Türinnenblech 1 den Türinnenraum 2 umschließt, der die Funktionselemente der Tür aufnimmt (die Funktionselemente wie Fensterheber, Fensterführungen, Schloß und Schloßbetätigung sind der Übersichtlichkeit wegen nicht mit dargestellt). Das Türinnenblech 1 bildet mit dem Türaußenblech 5 den umlaufenden Versteifungskasten 6. Zwischen Türinnenblech 1 und Türaußenblech 5 befindet sich in der in Fig. 1 dargestellten Ausführung der Zwischenraum 13, der mit einem dämpfenden und/oder energieabsorbierenden Füllstoff versehen sein kann bzw. stoßabsorbierende Elemente 14 aufnimmt. Der Zwischenraum 13 kann beispielsweise ausgeschäumt sein, um das akustische Verhalten der Karosserie zu verbessern; das Verhalten bei einem Seitenstoß könnte durch eine verformbare Wabenkonstruktion optimiert werden. Eine Fensterscheibe 12 kann dabei auf der Seite zum Türinnenblech 1 hin oder auch zur Seite zum Modulträger 4 hin geführt sein (nicht mit dargestellt). Eine Innenverkleidung 3 ist in ihrer Kontur gestrichelt dargestellt.

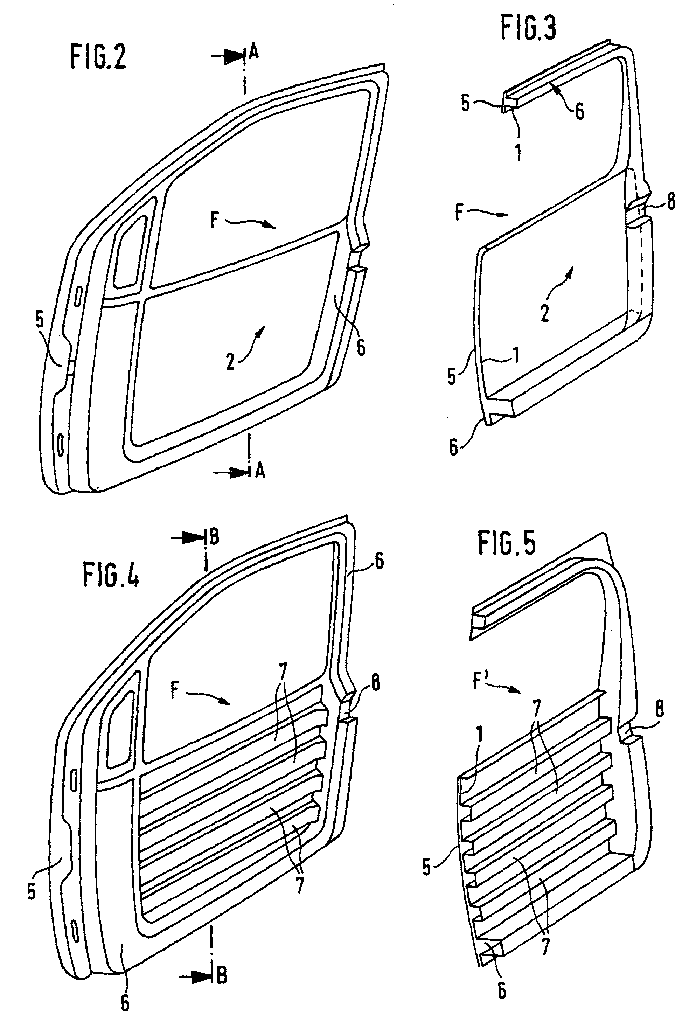

Aus Fig. 2 sind das Türaußenblech 5 und der offen zugängliche Türinnenraum 2 ersichtlich. Der Versteifungskasten 6 umrandet die gesamte Tür, er gibt mit seiner Tiefe den Türinnenraum 2 vor. Die Brüstung des Fensterausschnittes ist mit F bezeichnet.

Deutlicher als in der Gesamtdarstellung der Fig. 2, ist aus Fig. 3 ersichtlich, wie sich das in Fig. 2 dargestellte Grundelement der erfindungsgemäßen Tür aus dem Türinnenblech 1 und dem Türaußenblech 5 zusammensetzt. Der Verlauf und die Querschnittsform des Versteifungskastens 6 sind dabei anhand des Schnittes A-A gut erkennbar.

Fig. 4 zeigt wie Fig. 2 das Grundelement der in perspektivischer Ansicht, diesmal aber am Beispiel einer Tür mit Seitenverstärkung. Die waagerecht verlaufenden kastenförmigen Versteifungsprofile 7 werden dabei durch die Formgebung des Türinnenbleches 1 vorgegeben. Form und Verlauf der Versteifungsprofile 7 sind in Fig. 4 beispielsweise dargestellt; für beides besteht jedoch weitgehend Gestaltungsfreiheit, beispielsweise sind auch Versteifungsprofil-Netzwerke möglich. Der umlaufende Versteifungskasten 6, der der Tür Verwindungssteife gibt, wird beibehalten. Die Versteifungsprofile 7 sind mit dem umlaufenden Versteifungskasten 6 direkt verbunden und bilden ein statisches Gesamtsystem, das dem Grundelement der Tür ein besonders gutes Steifigkeitsverhalten und gute Sicherheitseigenschaften bei einem Seitencrash verleiht. Im Bereich 8 ist der Versteifungskasten 6 zur Aufnahme des Türschlosses abgeflacht ausgeführt.

Fig. 5 verdeutlicht anhand des Schnittes B-B die Formgebung des Türinnenbleches 1. Die Versteifungsprofile 7 sind flacher ausgeführt als der Versteifungskasten 6, so daß für die Funktionselemente hinreichender Türinnenraum verbleibt.

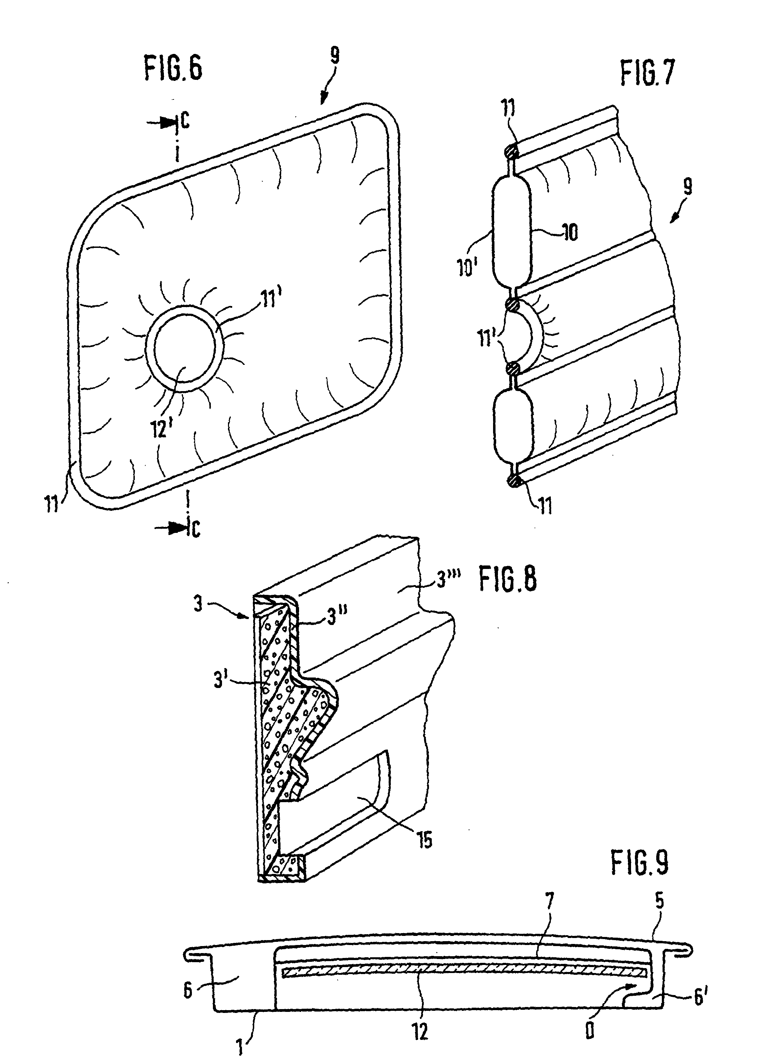

Fig. 6 zeigt eine flächige Feuchtesperre in Form eines Luftsackes 9 in der Ansicht.

Fig. 7 erläutert Einzelheiten dazu anhand des Schnittes C-C in Fig. 6. Miteinander verschweißte Folien 10 und 10' bilden den flachen aufblasbaren Luftsack 9 (das Ventil ist nicht mit dargestellt), der als Feuchtesperre den Türinnenraum 2 abdeckt, und der eine umlaufende Dichtung 11 besitzt. Eine Öffnung 12 erlaubt den Durchgriff des Fensterhebers zur Scheibe. Auch die Öffnung 12 ist mit einer umlaufenden Dichtung 11' versehen, die den Durchtritt von Feuchte verhindert.

Fig. 8 zeigt eine vorteilhafte Ausführung der zum Fahrzeuginnenraum weisenden Türinnenverkleidung 3. Ein aus geblähten Styroporkugeln bestehender Grundkörper, d.h. das Trägerteil 3', gibt die Kontur des Türsystems zur Fahrgastzelle hin näherungsweise vor. Das Trägerteil 3' ist mit einer Weichschaumschicht 3" abgedeckt, die einer Dekorschicht 3"' einen angenehmen "Griff" gibt (gute Haptik). Eine Höhlung 15 für eine (nicht dargestellte) aufmontierbare Kartentasche ist in das Trägerteil 3' integriert; es ist natürlich auch möglich, die komplette Kartentasche mit auszuformen. Die Weichschaumschicht 3" kann, anders als in Fig. 8 dargestellt, unterschiedliche Dicke besitzen und es so ermöglichen, unterschiedliche Innenraumvarianten mit einem einheitlichen Trägerteil 3' zu realisieren. Die Dekorschicht 3"' kann, wie üblich, aus Folie, Leder, Gewebe oder, was besonders vorteilhaft ist, aus einer Slush-Haut bestehen.

Fig. 9 erläutert, wie durch einen hinterschnittenen Bereich D des umlaufenden Versteifungskastens 6 die Scheibe 12 verbreitert werden kann. Durch den hinterschnittenen Bereich D entsteht ein Querschnitt 6' des Versteifungskastens 6, der näherungsweise einem U-Profil entspricht, so daß eine hinreichende Gesamtsteifigkeit des Versteifungskastens 6 gewahrt bleibt.

## Patentansprüche

1. Fahrzeugtür, bestehend aus einem Türaußenblech, einem Türinnenblech, einer beweglichen Fensterscheibe, einem Modulträger mit zugehörigen Funktionselementen, und einer Innenverkleidung,
**dadurch gekennzeichnet,**
**daß** sich der Modulträger (4) und die von ihm getragenen Funktionselemente in dem zwischen Türinnenblech (1) und Innenverkleidung (3) gebildeten Türinnenraum befinden.

2. Tür nach Anspruch 1, **dadurch gekennzeichnet, daß** das Türaußenblech (5) und das Türinnenblech (1) einen umlaufenden Versteifungskasten (6) bilden, und daß das Türinnenblech (1) innerhalb der vom Versteifungskasten (6) umrandeten Fläche zumindest bereichsweise am Türaußenblech (5) anliegt.

3. Tür nach Anspruch 1, **dadurch gekennzeichnet, daß** das Türaußenblech (5) und das Türinnenblech (1) mindestens ein kastenförmiges, näherungsweise waagerecht verlaufendes Versteifungsprofil (7) umschließen, das mit dem umlaufenden Versteifungskasten (6) verbunden ist, ein statisches Gesamtsystem bildend.

4. Tür nach Anspruch 1, **dadurch gekennzeichnet, daß** der umlaufende Versteifungskasten (6) zumindest im Bereich des Türschlosses (8) abgeflacht ausgeführt ist.

5. Tür nach einem der vorangehenden Ansprüche, **dadurch gekennzeichnet, daß** der Versteifungskasten (6) im Bereich zumindest einer der beiden angrenzenden, annähernd senkrechten Säulen einen hinterschnittenen Bereich (D) besitzt, in dem die Fensterscheibe (12) bewegbar ist.

6. Tür nach einem der vorangehenden Ansprüche, **dadurch gekennzeichnet, daß** das Türinnenblech (1) im Scharnierbereich innerhalb des Versteifungskastens (6) verstärkt ist.

7. Tür nach einem der vorangehenden Ansprüche, **dadurch gekennzeichnet, daß** Türaußenblech (5) und Türinnenblech (1) durch Klebung flächig miteinander verbunden sind.

8. Tür nach einem der vorangehenden Ansprüche, **dadurch gekennzeichnet, daß** das Türaußenblech (5) und/oder das Türinnenblech (1) zumindest teilweise aus nichtmetallischen Werkstoffen besteht.

9. Tür nach Anspruch 7, **dadurch gekennzeichnet, daß** das Türaußenblech (5) und/oder das Türinnenblech (1) Hybridstruktur und Versteifungsnetzwerke besitzt, die von den kastenförmigen Versteifungen (6,7) aufgenommen werden.

10. Tür nach einem der vorangehenden Ansprüche, **dadurch gekennzeichnet, daß** ein mindestens einsträngiger Seilzugheber für die Scheibenbewegung am Modulträger (4) befestigt und die Fensterscheibe (12) vom Fahrzeuginnenraum her gesehen hinter dem Seilzugheber angeordnet ist.

11. Tür nach einem der Ansprüche 1 bis 9, **dadurch gekennzeichnet, daß** ein mindestens einsträngiger Seilzugheber für die Scheibenbewegung am Türinnenblech (1) befestigt und die Fensterscheibe (12) vom Fahrzeuginnenraum her gesehen vor dem Seilzugheber angeordnet ist.

12. Tür nach einem der vorangehenden Ansprüche, **dadurch gekennzeichnet, daß** zwischen den auf dem Modulträger (4) montierten Funktionselementen und der Fensterscheibe (12) mit den Fensterhebern eine flächige, umlaufend gedichtete Feuchtesperre (9) angeordnet ist.

13. Tür nach Anspruch 12, **dadurch gekennzeichnet, daß** die Feuchtesperre (9) eine wiederverwendbare Formschale (10) ist.

14. Tür nach Anspruch 12, **dadurch gekennzeichnet, daß** die Feuchtesperre (9) eine einmalig zu verwendende Schrumpffolie ist.

15. Tür nach Anspruch 12, **dadurch gekennzeichnet, daß** die Feuchtesperre (9) ein aus Folien (10,10') gebildeter flächiger Luftsack ist, der umlaufende Dichtungen (11,11') aufweist.

16. Tür nach einem der vorangehenden Ansprüche, **dadurch gekennzeichnet, daß** die Innenverkleidung (3) einen Schichtaufbau mit einem voluminösen profilgebenden Trägerteil (3') aus geblähten Polypropylenkugeln, auf das eine dünne Polsterschicht (3") aus Polyurethan-Weichschaum aufgebracht, die mit einer Dekorschicht (3"') aus Folien und/oder Geweben und/oder Leder abgedeckt und flächig haftend verbunden ist, besitzt.

17. Tür nach Anspruch 16, **dadurch gekennzeichnet, daß** das voluminöse Trägerteil (3') der Innenverkleidung (3) napfförmige Vertiefungen (11) besitzt, in die auf dem Modulträger (4) montierte Funktionselemente zumindest teilweise hineinragen.

18. Tür nach einem der vorangehenden Ansprüche, **dadurch gekennzeichnet, daß** der Modulträger (4) mit allen auf ihm vormontierten und gegebenenfalls vorgeprüften Funktionselementen mit der Innenverkleidung (3) zu einer kompletten Baugruppe verbunden ist.

19. Tür nach einem der vorangehenden Ansprüche, **dadurch gekennzeichnet, daß** das aus Türaußenblech (5) und Türinnenblech (1) gebildete typenspezifische Basiselement mit Modulträger (4), Funktionselementen und Innenverkleidungen (3) unterschiedlicher Ausstattungsqualität und/oder unterschiedlichem Innenraumdesign der Innenverkleidung (3) bestückt ist.

## Claims

1. Vehicle door comprising an outer door panel, an inner door panel, a movable window pane, a module support with accompanying functional elements, and an inner lining, **characterised by** the fact that the module support (4) and the functional elements supported by it are located inside the door chamber which is formed by the inner door panel (1) and the inner lining (3).

2. Door as in Claim 1, **characterised by** the fact that the outer door panel (5) and the inner door panel (1) form a continuous strengthening box (6), and that the inner door panel (1) fits closely at least in certain areas against the outer door panel (5) within the area surrounded by the strengthening box.

3. Door as in Claim 1, **characterised by** the fact that the outer door panel (5) and the inner door panel (1) enclose at least one box-shaped, approximately horizontal strengthening profile section (7), which is connected to the surrounding strengthening box (6) to form an overall static system.

4. Door as in Claim 1, **characterised by** the fact that the continuous strengthening box (6) is flattened in shape at least in the area of the door lock (8).

5. Door as in one of the preceding Claims, **characterised by** the fact that the strengthening box (6) has an undercut area (D) in the area of at least one of the two adjacent and approximately vertical pillars, in which area the window pane (12) is movable.

6. Door as in one of the preceding Claims, **characterised by** the fact that the inner door panel (1) is reinforced inside the strengthening box (6) in the area of the hinge.

7. Door as in one of the preceding Claims, **characterised by** the fact that the outer door panel (5) and the inner door panel (1) are joined together face to face by adhesion.

8. Door as in one of the preceding Claims, **characterised by** the fact that the outer door panel (5) and/or the inner door panel (1) consist at least in part of non-metallic materials.

9. Door as in Claim 7, **characterised by** the fact that the outer door panel (5) and/or the inner door panel (1) have a hybrid structure and strengthening lattice units which are held in the box-shaped reinforcements (6, 7).

10. Door as in one of the preceding Claims, **characterised by** the fact that a cable-actuated lift for moving the window, having at least a single cable, is attached to the module support (4), and that the window (12) is positioned behind the window lift when viewed from the interior of the vehicle outwards.

11. Door as in one of Claims 1 to 9, **characterised by** the fact that a cable-actuated lift for moving the window, having at least a single cable, is attached to the inner door panel (1), and that the window (12) is positioned in front of the window lift when viewed from the interior of the vehicle outwards.

12. Door as in one of the preceding Claims, **characterised by** the fact that there is a flat moisture barrier (9), sealed all round, between the functional elements mounted on the module support (4) and the window (12) and window lifts.

13. Door as in Claim 12, **characterised by** the fact that the moisture barrier (9) is a reusable moulded tray (10).

14. Door as in Claim 12, **characterised by** the fact that the moisture barrier (9) is a single-use shrink film.

15. Door as in Claim 12, **characterised by** the fact that the moisture barrier (9) is in the form of a flat air sac made of film (10, 10'), having continuous seals (11, 11').

16. Door as in one of the preceding Claims, **characterised by** the fact that the inner lining (3) has a layered construction with a high-bulk support section (3') - which gives it its shape - made of expanded polypropylene balls, on to which is applied a thin cushion layer (3") made of low-density polyurethane foam, which is covered by, and joined face to face by adhesion with, a decorative layer (3" ') made of film and/or fabrics and/or leather.

17. Door as in Claim 16, **characterised by** the fact that the high-bulk support section (3') of the inner lining (3) has dish-shaped indentations (11), into which protrude, at least partly, the functional elements mounted on the module support (4).

18. Door as in one of the preceding Claims, **characterised by** the fact that the module support (4), together with all the functional elements pre-assembled on it and - where required - pre-tested, is joined to the inner lining (3) to form a complete sub-assembly.

19. Door as in one of the preceding Claims, **characterised by** the fact that the model-specific basic element comprising the outer door panel (5) and the inner door panel (1) is fitted with module supports (4), functional elements and inner linings (3) of different trim qualities and/or with different interior styles for the inner lining (3).

## Revendications

1. Porte de véhicule, constituée d'un panneau extérieur, d'un panneau intérieur, d'une vitre mobile, d'un support d'équipements avec éléments fonctionnels correspondants et d'une garniture intérieure,
**caractérisé en ce que**
le support d'équipements (4) et les éléments fonctionnels qu'il supporte se trouvent dans l'espace intérieur formé entre le panneau intérieur (1) et la garniture intérieure (3).

2. Porte selon revendication 1, **caractérisée en ce que** le panneau extérieur (5) et le panneau intérieur (1) forment un cadre de renfort (6) continu et **en ce que** le panneau intérieur (1) plaque, du moins à certains endroits, contre le panneau extérieur (5) à l'intérieur de la surface entourée par le cadre de renfort (6).

3. Porte selon revendication 1, **caractérisée en ce que** le panneau extérieur (5) et le panneau intérieur (1) entourent au moins un profilé de renfort (7) continu approximativement horizontal en forme de caisson relié au cadre de renfort (6) continu, formant un système global statique.

4. Porte selon revendication 1, **caractérisée en ce que** le cadre de renfort (6) continu est aplati au moins au niveau de la serrure (8).

5. Porte selon l'une quelconque des revendications précédentes, **caractérisée en ce que** le cadre de renfort (6), au niveau, au moins, de l'un des deux montants contigus approximativement verticaux, comporte une zone contre-dépouillée (D) dans laquelle la vitre (12) peut bouger.

6. Porte selon l'une quelconque des revendications précédentes, **caractérisée en ce que** le panneau intérieur (1) est renforcé à l'intérieur du cadre de renfort (6) au niveau de la charnière.

7. Porte selon l'une quelconque des revendications précédentes, **caractérisée en ce que** le panneau extérieur (5) et le panneau intérieur (1) sont collés ensemble.

8. Porte selon l'une quelconque des revendications précédentes, **caractérisée en ce que** le panneau extérieur (5) et/ou le panneau intérieur (1) sont constitués, au moins en partie, de matériaux non métalliques.

9. Porte selon revendication 7, **caractérisée en ce que** le panneau extérieur (5) et/ou le panneau intérieur (1) ont une structure hybride et un réseau de renfort repris par les renforts en forme de caisson (6, 7).

10. Porte selon l'une quelconque des revendications précédentes, **caractérisée en ce qu'**au moins une tirette à un câble destinée au mouvement de la vitre est fixée sur le support d'équipements (4) et **en ce que** la vitre (12), vue de l'intérieur du véhicule, est placée derrière le lève-vitre.

11. Porte selon l'une quelconque des revendications 1 à 9, **caractérisée en ce qu'**au moins une tirette à un câble destinée au mouvement de la vitre est fixée sur le panneau intérieur (1) et **en ce que** la vitre (12) est placée devant le lève-vitre vue de l'intérieur du véhicule.

12. Porte selon l'une quelconque des revendications précédentes, **caractérisée en ce que**, entre les éléments fonctionnels montés sur le support d'équipements (4) et la vitre (12) avec les lève-vitres, il y a un élément anti-humidité (9), plat, continu et étanche.

13. Porte selon revendication 12, **caractérisée en ce que** l'élément anti-humidité (9) est une coque moulée réutilisable (10).

14. Porte selon revendication 12, **caractérisée en ce que** l'élément anti-humidité (9) est un film rétractable à usage unique.

15. Porte selon revendication 12, **caractérisée en ce que** l'élément anti-humidité (9) est une poche d'aire plate constituée de films (10, 10') présentant des joints (11, 11') continus.

16. Porte selon l'une quelconque des revendications précédentes, **caractérisée en ce que** la garniture intérieure (3) a une structure stratifiée avec un support (3') volumineux, qui détermine le profil, en billes de polypropylène soufflées sur lequel est appliquée une mince couche (3") de mousse de polyuréthane souple recouverte d'une couche décor (3"') en films et/ou tissus et/ou cuir et adhérant sur sa surface.

17. Porte selon revendication 16, **caractérisée en ce que** le support volumineux (3') de la garniture intérieure (3) possède des creux (11) en forme de coupelle dans lesquels viennent se loger, au moins en partie, les éléments fonctionnels montés sur le support d'équipements (4).

18. Porte selon l'une quelconque des revendications précédentes, **caractérisée en ce que** le support d'équipements (4) avec tous les éléments fonctionnels préinstallés et, le cas échéant, précontrôlés, est relié à la garniture intérieure (3) pour former un ensemble complet.

19. Porte selon l'une quelconque des revendications précédentes, **caractérisée en ce que** l'élément de base spécifique à chaque modèle, constitué du panneau extérieur (5) et du panneau intérieur (1), est équipé d'un support d'équipements (4), d'éléments fonctionnels et de garnitures intérieures (3) d'une qualité différente et/ou avec un design différent pour la garniture intérieure (3).
